**Europäisches Patentamt**

**European Patent Office**

**Office européen des brevets**

(19)

(11) Veröffentlichungsnummer: **0 173 912**
**B1**

(12)

# EUROPÄISCHE PATENTSCHRIFT

(45) Veröffentlichungstag der Patentschrift:
**13.07.88**

(51) Int. Cl.⁴: **B 60 T 11/26**

(21) Anmeldenummer: **85110423.2**

(22) Anmeldetag: **20.08.85**

(54) **Bremsflüssigkeitsbehälter für Kraftfahrzeuge.**

(30) Priorität: **01.09.84 DE 3432287**

(43) Veröffentlichungstag der Anmeldung:
**12.03.86 Patentblatt 86/11**

(45) Bekanntmachung des Hinweises auf die Patenterteilung:
**13.07.88 Patentblatt 88/28**

(84) Benannte Vertragsstaaten:
**DE FR GB IT**

(56) Entgegenhaltungen:
**DE - A - 2 558 824**
**US - A - 4 103 492**
**US - A - 4 114 377**

**PATENT ABSTRACTS OF JAPAN, Band 5, Nr. 76
(M-69)[748], 20. Mai 1981; & JP - A - 56 25045 (YAMAHA
HATSUDOKI) 10.03.1981**

(73) Patentinhaber: **BAYERISCHE MOTOREN WERKE
Aktiengesellschaft, Postfach 40 02 40 Petuelring 130 -
AJ-36, D-8000 München 40 (DE)**

(72) Erfinder: **Gratza, Peter, Bergwachtstrasse 12,
D-8000 München 50 (DE)**

(74) Vertreter: **Dexheimer, Rolf, Bayerische Motoren Werke
Aktiengesellschaft Postfach 40 02 40 Petuelring 130 -
AJ-31, D-8000 München 40 (DE)**

### Beschreibung

Die Erfindung bezieht sich auf einen Bremsflüssigkeitsbehälter für Kraftfahrzeuge, mit einem dicht auf den Behälter aufsetzbaren Deckel und einem vom Deckel in das Behälterinnere ragenden gummielastischen Balg, dessen Oberseite zur Atmosphäre hin entlüftet ist.

Ein Bremsflüssigkeitsbehälter dieser Art ist aus der Patent Abstract of Japan, Band 5, Nr 76 (M-69)[748], 20. Mai 1981; & JP-A-5625045 (Yamaha Hatsudoki) 10.03.1981 bekannt.

Der Balg hat die Aufgabe, einerseits ein Nachströmen von Bremsflüssigkeit bei erhöhtem Bedarf an Bremsflüssigkeit zu ermöglichen und andererseits die Bremsflüssigkeit gegen die Atmosphäre abzuschirmen. Es ist wichtig, dass die hygroskopische Bremsflüssigkeit möglichst wenig Feuchtigkeit aus der Atmosphäre aufnimmt. Die Verbindung der Balgoberseite mit der Atmosphäre erfolgt in der Regel durch kleine Öffnungen im Deckel oder auch durch Schlitze zwischen Deckel und Gummibalgoberseite.

Nachteilig ist es dabei, dass auch durch relativ kleine Belüftungsöffnungen im Bereich des Deckels – etwa beim Abspritzen der Maschine oder bei längerer Fahrt in starkem Regen – Wasser auf die Balgoberseite gelangen und sich dort ansammeln kann. Dieses gelangt durch Diffusion oder auch durch ungeschicktes Hantieren mit dem Deckel bei der Bremsflüssigkeitskontrolle in die Bremsflüssigkeit, was verhindert werden soll.

Bei Bremsflüssigkeitsbehältern anderer Gattung (ohne Balg) ist es bereits vorgeschlagen worden (DE-A-2339279 oder EP-A-0085015), die Belüftung über Kanäle durchzuführen, die am unteren Deckelrand münden. Dies gewährleistet beispielsweise bei den oben angeführten Einsatzbedingungen wegen der kurzen Strömungswege keine genügende Sicherheit gegen Wasseraufnahme der Bremsflüssigkeit.

Der Erfindung liegt die Aufgabe zugrunde, einen Bremsflüssigkeitsbehälter der eingangs genannten Gattung zu schaffen, mit der die Balgoberseite zwar einwandfrei belüftet, einem Wassereintritt auf die Balgoberseite aber möglichst sicher entgegengewirkt werden kann.

Diese Aufgabe wird erfindungsgemäss durch eine vom Behälterboden zur Balgoberseite führende Entlüftungsleitung gelöst. Auf diese Weise ist eine wesentlich längere in lotrechter Richtung verlaufende Entlüftungsleitung geschaffen, durch die auch beim Abspritzen eines Motorrades oder bei längerer Regenfahrt kein Wasser nach oben gedrückt werden kann.

Der Erfindung ist im folgenden anhand zweier in der Zeichnung dargestellter Ausführungsbeispiele näher erläutert. Es zeigen:

Fig. 1 eine erste Ausführungsform der Erfindung, bei der der Bremsflüssigkeitsbehälter direkt auf dem Geberzylinder einer Bremsanlage aufgesetzt ist, teilweise im Schnitt;

Fig. 2 einen Schnitt durch ein zweites Ausführungsbeispiel und

Fig. 3 einen Schnitt nach der Linie III/III in Fig. 2.

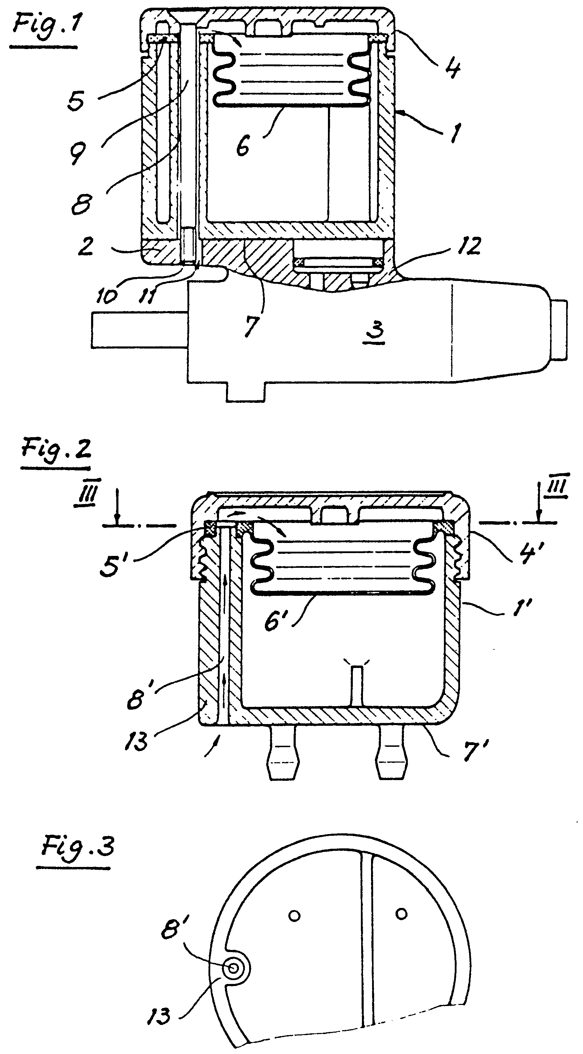

Der in Fig. 1 der Zeichnung dargestellte Bremsflüssigkeitsbehälter 1 ist auf einer Aufsetzplatte 2 eines Geberzylinders 3 einer Bremsanlage eines Motorrads aufgesetzt. Der Behälter 1 ist oben mit einem Deckel 4 verschlossen. Einstückig mit der zwischen dem Deckel 4 und dem oberen Rand des Behälters 1 eingespannten Dichtung 5 ist ein gummielastischer Balg 6 ausgebildet, der in das Behälterinnere nach unten ragt. Der die Anreicherung der Bremsflüssigkeit mit Feuchtigkeit verhindernde Balg 6 ist zu seiner Oberseite hin von der Atmosphäre her belüftet, damit Volumendifferenzen in dem Behälter 1 bei sich änderndem Bremsflüssigkeitsspiegel möglich sind.

Zur Belüftung ist eine vom Behälterboden 7 zur Balgoberseite führende Entlüftungsleitung 8 vorgesehen.

Bei dem Ausführungsbeispiel nach Figur 1, bei dem der Deckel 4 mittels den Behälter 1 in der ganzen Höhe durchsetzende Befestigungsschrauben 9 mit dem Behälter 1 verbunden ist, bildet das im Behälter 1 ausgebildete Schraubenloch die Entlüftungsleitung 8 und das der Befestigungsschraube 9 zugeordnete Gewinde 10 hat eine Längsaussparung 11. Die Längsaussparung 11 ist in der Aufsetzplatte 2 des Gebergehäuses 12 ausgebildet, gegen die der Behälter 1 samt Deckel 4 durch die Befestigungsschrauben 9 gespannt ist.

Bei dem Ausführungsbeispiel nach den Figuren 2 und 3 findet ein Schraubdeckel 4' Verwendung, der über ein Aussengewinde des Behälters 1' mit diesem verschraubt ist. Die Entlüftungsleitung 8', die vom Behälterboden 7' durch eine entsprechende Öffnung in der Dichtung 5' zur Oberseite des Balges 6' führt, ist durch eine in der Behälterwandung 13 ausgebildete Bohrung gebildet. Die Entlüftungsleitung 8 mündet unten ins Freie und oben in den innerhalb der Deckeldichtung gelegenen Raum.

### Patentansprüche

1. Bremsflüssigkeitsbehälter für Kraftfahrzeuge, mit einem dicht auf den Behälter aufsetzbaren Deckel und einem vom Deckel in das Behälterinnere ragenden gummielastischen Balg, dessen Oberseite zur Atmosphäre hin entlüftet ist, dadurch gekennzeichnet, dass eine vom Behälterboden (7, 7') zur Balgoberseite führende Entlüftungsleitung (8, 8') vorgesehen ist.

2. Bremsflüssigkeitsbehälter nach Anspruch 1 mit einem durch Befestigungsschrauben auf den Behälter aufgesetzten Deckel, dadurch gekennzeichnet, dass das Schraubenloch die Entlüftungsleitung bildet und das der Befestigungsschraube (9) zugeordnete Gewinde (10) eine Längsaussparung (11) aufweist.

3. Bremsflüssigkeitsbehälter nach Anspruch 2, dadurch gekennzeichnet, dass die Längsaussparung (11) in der Aufsetzplatte (2) eines Gebergehäuses (12) ausgebildet ist, gegen die der Behälter (1) samt Deckel (4) durch die Befestigungsschrauben (9) gespannt ist.

4. Bremsflüssigkeitsbehälter nach Anspruch 1, dadurch gekennzeichnet, dass die Entlüftungsleitung (8') durch eine in der Behälterwandung (13) ausgebildete Bohrung gebildet ist, die unten ins Freie und oben in den innerhalb der Deckeldichtung (5') gelegenen Raum mündet.

## Claims

1. A brake fluid container for motor vehicles comprising a cover secured in sealing-tight manner to the container and an elastomeric bellows extending from the cover into the container, the top side of the bellows being vented to atmosphere, characterised in the provision of a vent passage (8, 8') which extends from the container bottom (7, 7') to the top of the bellows.

2. A brake fluid container according to claim 1 comprising a cover secured to the container by screws, characterised in that the screw hole constitutes the vent passage and the thread (10) of the screw (9) has a longitudinal recess (11) associated therewith.

3. A brake fluid container according to claim 2, characterised in that the longitudinal recess (11) is formed in the mounting plate (2) of a transmission casing (12), against which the container (1) and cover (4) are clamped by the securing screws (9).

4. A brake fluid container according to claim 1, characterised in that the vent passage (8') is a bore formed in the container wall (13) and opening at its lower end into atmosphere and at its upper end into the space inside the cover seal (5').

## Revendications

1. Réservoir de fluide de freinage pour véhicules à moteur, comportant un couvercle pouvant se monter de manière étanche sur le réservoir et un soufflet en caoutchouc élastique partant du couvercle pour pénétrer à l'intérieur du réservoir dont le côté supérieur est purgé d'air vers l'atmosphère, réservoir caractérisé en ce qu'il comporte une conduite de purge d'air (8, 8') allant du fond de réservoir (7, 7'), jusqu'au côté supérieur du soufflet.

2. Réservoir de fluide de freinage selon la revendication 1, muni d'un couvercle monté sur le réservoir par des vis de fixation (9), réservoir caractérisé en ce que le trou de vis forme la conduite de purge d'air et en ce que le filetage (10) destiné à la vis de fixation (9) présente un évidement longitudinal (11).

3. Réservoir de fluide de freinage selon la revendication 2, caractérisé en ce que l'évidement longitudinal (11) est formé dans la plaque d'appui (2) d'un carter de maître-cylindre (12), contre laquelle le réservoir (1) est serré, avec le couvercle (4), par les vis de fixation (9).

4. Réservoir de fluide de freinage selon la revendication 1, caractérisé en ce que la conduite de purge d'air (8') est formée par un alésage formé dans la paroi de réservoir (13), cet alésage débouchant à l'air libre dans le bas et communiquant dans le haut avec l'espace situé à l'intérieur du joint de couvercle (5').

_Fig.1_

5

9

8

2

10 11

7

6

4

1

12

_3_

_Fig.2_

$\overline{III}$

5'

8'

13

6'

4'

1'

7'

$\overline{III}$

_Fig.3_

8'

13